# EUROPÄISCHE PATENTANMELDUNG

(11) **EP 3 868 537 A1**
(43) Veröffentlichungstag der Anmeldung: **25.08.2021**
(21) Anmeldenummer: 20020078.0
(22) Anmeldetag: 20.02.2020
(51) Int. Cl.: B29C 44/34

(54) **VORRICHTUNG ZUR IMPRÄGNIERUNG VON KUNSTSTOFFGRANULAT MIT KONTINUIERLICHER GRANULATZUFUHR**

(71) Anmelder: Linde GmbH, 82049 Pullach (DE)
(72) Erfinder: Heninger, Rolf, 85635 Höhenkirchen-Siegertsbrunn (DE); Praller, Andreas, 82110 Germering (DE); Szych, Pawel, 81241 München (DE); Dezsi, Sandor, 85354 Freising (DE)
(74) Vertreter: Gellner, Bernd

(57) **Zusammenfassung**

Die Erfindung betrifft eine Vorrichtung zum Imprägnieren eines Kunststoffgranulats (K) mit einem Treibmittel (T), aufweisend einen Druckbehälter (10), der einen Innenraum (11) zur Aufnahme des Kunststoffgranulats (K) aufweist, einen Einlass (12) des Druckbehälters (10) zum Einfüllen von Kunststoffgranulat (K) in den Innenraum (11) des Druckbehälters (10), einen Treibmitteleinlass (13) zum Einleiten des Treibmittels (T) in den Innenraum (11) des Druckbehälters (10), und einen Auslass (14) des Druckbehälters (10) zum Entnehmen von mit dem Treibmittel (T) imprägniertem Kunststoffgranulat (K) aus dem Druckbehälter (10). Erfindungsgemäß ist vorgesehen, dass der Druckbehälter (10) zum kontinuierlichen Imprägnieren von Kunststoffgranulat (K) im Innenraum (11) des Druckbehälters (10) sowie zur kontinuierlichen Entnahme von imprägniertem Kunststoffgranulat (K) aus dem Druckbehälter (10) über den Auslass (14) ausgebildet ist, wobei der Auslass (14) ein Dosierventil (V_{d2}) aufweist, so dass ein pro Zeiteinheit aus dem Innenraum (11) des Druckbehälters (10) entnehmbarer Volumenstrom des imprägnierten Kunststoffgranulats (K) einstellbar ist.

## Beschreibung

Die Erfindung betrifft eine Vorrichtung zur Imprägnierung von Kunststoffgranulat mit einem Treibmittel, insbesondere Kohlendioxid (CO₂).

Ein solches imprägniertes Kunststoffgranulat wird z.B. als Ausgangsmaterial eines Spritzgussverfahrens verwendet. Zum Imprägnieren des Kunststoffgranulats mit dem Treibmittel, z.B. CO₂, wird das Granulat nach einer Trocknung in einem Druckbehälter (Autoklav) mit dem CO₂ kontaktiert, wobei die vom Kunststoffgranulat aufgenommene CO₂-Menge von dem Kunststoff selbst, vom Druck im Druckbehälter, von der Temperatur im Druckbehälter und von der Imprägnierungszeit, d.h. von der Zeit, während der das Kunststoffgranulat mit dem Treibmittel CO₂ im Druckbehälter kontaktiert wird, abhängt. Das CO₂ verbleibt typischerweise zwei Stunden im Kunststoffgranulat nachdem es geladen und der Druck abgebaut wurde. Diese Verweilzeit ermöglicht nachfolgend eine Weiterverarbeitung des Kunststoffgranulats, z. B. durch Spritzgießen (siehe oben), durch Extrusion, oder auch durch andere Prozesse, wie Blasformen oder Partikelschaum-Herstellung, wobei aufgrund der Imprägnierung des Granulats mit dem Treibmittel, das aus dem imprägnierten Kunststoffgranulat spritzgegossene Teil eine Zellstruktur aufweist.

Das Imprägnieren des Granulats mit dem Treibmittel wird üblicherweise in einem sogenannten Batch-Prozess vorgenommen, bei dem eine bestimmte Charge des Kunststoffgranulats mit dem Treibmittel imprägniert wird und in einem Pufferbehälter gespeichert wird. Während der Lagerzeit des imprägnierten Granulats erfolgt jedoch bereits eine Desorption des Treibmittels CO₂, was zur Instabilität des nachfolgenden Spritzgussverfahrens führen kann. Weiterhin führt gerade das Herstellen kleiner Chargen des imprägnierten Kunststoffmaterials zu einem vergleichsweise hohen CO₂-Verlust.

Der vorliegenden Erfindung liegt daher die Aufgabe zugrunde, hinsichtlich der oben genannten Problematik eine verbesserte Vorrichtung und ein verbessertes Verfahren zur Verfügung zu stellen.

Diese Aufgabe wird durch eine Vorrichtung mit den Merkmalen des Anspruchs 1 sowie durch ein Verfahren mit den Merkmalen des Anspruchs 11 gelöst.

Bevorzugte Ausgestaltungen des jeweiligen Erfindungsaspekts sind in den entsprechenden Unteransprüchen angegeben und werden nachfolgend beschrieben.

Gemäß Anspruch 1 wird eine Vorrichtung zum Imprägnieren eines Kunststoffgranulats mit einem Treibmittel offenbart, aufweisend:
- einen Druckbehälter, der einen Innenraum zur Aufnahme des Kunststoffgranulats aufweist,
- einen Einlass des Druckbehälters zum Einfüllen von Kunststoffgranulat in den Innenraum des Druckbehälters,
- einen Treibmitteleinlass zum Einleiten des Treibmittels in den Innenraum des Druckbehälters sowie insbesondere einen Treibmittelauslass, um Treibmittel aus dem Innenraum des Drückbehälters zu entfernen, und
- einen Auslass des Druckbehälters zum Entnehmen von mit dem Treibmittel imprägniertem Kunststoffgranulat aus dem Druckbehälter.

Erfindungsgemäß ist vorgesehen, dass der Druckbehälter zum kontinuierlichen Imprägnieren von Kunststoffgranulat im Innenraum des Druckbehälters sowie zur kontinuierlichen Entnahme von imprägniertem Kunststoffgranulat aus dem Druckbehälter über den Auslass ausgebildet ist, wobei der Auslass ein Dosierventil aufweist, so dass ein pro Zeiteinheit aus dem Innenraum des Druckbehälters entnehmbarer Volumenstrom des imprägnierten Kunststoffgranulats einstellbar ist.

Bei dem Treibmittel handelt es sich bevorzugt um Kohlendioxid (CO₂), das sich im Innenraum des Druckbehälters im gasförmigen Zustand oder alternativ im überkritischen Zustand befinden kann.

Die Erfindung ermöglicht somit mit Vorteil gegenüber dem eingangs beschriebenen Batchprozess, der insbesondere bei kleinen Chargen einen hohen CO₂-Verlust aufweist, einen kontinuierlichen Prozess, bei dem das Imprägnieren und die Entnahme des Kunststoffgranulats kontinuierlich ablaufen, d.h. ohne vollständigen Druckabbau im Innenraum des Druckbehälters, im Gegensatz zum diskontinuierlichen Batch- bzw. Chargenprozess.

Im Sinne der Erfindung wird unter einem Kunststoffgranulat ein Schüttgut aus einer Vielzahl an festen Körpern (z.B. Körner, Kugeln, Pulver, Pellets etc.) verstanden. Das Kunststoffgranulat bzw. der jeweilige Körper kann aus einem oder mehreren Kunststoffen bestehen. Das Kunststoffgranulat bzw. der jeweilige Körper kann auch ein Additiv oder mehrere Additive aufweisen.

Der jeweilige Körper des Kunststoffgranulats kann z.B. ein Volumen im Bereich von 2 mm³ bis 25 mm³ aufweisen. Es sind jedoch auch andere Volumina möglich.

Bei dem Kunststoff bzw. den Kunststoffen des Kunststoffgranulats kann es sich z.B. um einen oder mehrere der folgenden Stoffe handeln:
- ein Polymer,
- ein thermoplastischer Kunststoff,
- ein duroplastischer Kunststoff,
- Polypropylen,
- Polystyrol,
- Polyamid,
- PBT,
- PET,
- PES,
- ein expandierbarer, mit einem Treibmittel (z.B. Pentan) beladener Kunststoff, z.B. aus Polypropylen, Polystyrol, Polyamid, PBT, PET oder PES zur Herstellung expandierter Partikelschäume (z.B. EPP, EPS, etc.).

Weiterhin ist gemäß einer bevorzugten Ausführungsform der Vorrichtung vorgesehen, dass das Dosierventil des Auslasses ein Kugelventil ist. Durch das am Auslass vorgesehene Dosierventil besteht mit Vorteil die Möglichkeit, das Kunststoffgranulat für einen nachfolgenden, formgebenden Prozess gezielt zu dosieren, ohne eine übermäßige Druckänderung im Innenraum des Druckbehälters zuzulassen, so dass die kontinuierliche Imprägnierung des Granulats mit dem Treibmittel nicht bzw. nur geringfügig gestört wird.

Das Kugelventil weist vorzugsweise einen um eine Achse drehbaren kugelförmigen Ventilkörper auf, der eine Tasche in Form eines Sacklochs aufweist, die in einer ersten Stellung des Ventilkörpers ein definiertes Volumen an Kunststoffgranulat aus dem Innenraum des Druckbehälters aufnehmen kann und in einer zweiten Stellung (z.B. nach einer 180°-Drehung um die besagte Achse) aus dem Innenraum ausgeben kann. Das pro Zeiteinheit aus dem Innenraum des Druckbehälters entnehmbare Volumen des Kunststoffgranulats hängt dabei von der Drehzahl des Ventilkörpers des Kugelventils ab, d.h. von der Anzahl der Drehungen um die besagte Achse pro Zeiteinheit (RPM), sowie vom Volumen der Tasche und kann z.B. durch entsprechendes Einstellen der Drehzahl gesteuert bzw. geregelt werden.

Weiterhin ist gemäß einer Ausführungsform der Erfindung vorgesehen, dass der Einlass ein Ventil zum Einlassen von Kunststoffgranulat in den Innenraum des Druckbehälters aufweist, wobei es sich bei diesem Ventil gemäß einer Ausführungsform vorzugsweise ebenfalls um ein Dosierventil handelt, so dass ein pro Zeiteinheit in den Innenraum des Druckbehälters einleitbarer Volumenstrom des Kunststoffgranulats einstellbar ist. Vorzugsweise ist das Dosierventil des Einlasses als Kugelventil ausgestaltet (siehe oben). Das Kugelventil des Einlasses weist ebenfalls vorzugsweise einen um eine Achse drehbaren kugelförmigen Ventilkörper auf, der eine Tasche in Form eines Sacklochs aufweist, die in einer ersten Stellung des Ventilkörpers ein definiertes Volumen an Kunststoffgranulat aus einer Zuleitung zum Druckbehälter aufnehmen kann und in einer zweiten Stellung (z. B. nach einer 180°-Drehung um die besagte Achse) in den Innenraum des Druckbehälters ausgeben kann.

Da das imprägnierte Kunststoffgranulat laufend mit einem bestimmten Volumen ausgegeben werden kann bzw. in den Innenraum des Druckbehälters eingeleitet werden kann, kann der Prozess auf einfache Weise kontinuierlich durchgeführt werden, so dass ein nennenswerter oder gar vollständiger Druckabbau im Innenraum des Druckbehälters vermeidbar ist.

Weiterhin kann der um die besagte Achse drehbare kugelförmige Ventilkörper des jeweiligen Dosierventils bzw. Kugelventils anstelle einer einzelnen Tasche eine Vielzahl an in Rotationsrichtung nebeneinander angeordnete Nuten aufweisen, die jeweils zur Aufnahme eines Kunststoffgranulatvolumens ausgebildet sind, das im Vergleich zu der besagten Tasche wesentlich kleiner ausfallen kann, so dass hier eine stetigere Entnahme bzw. ein stetigeres Einleiten des imprägnierten Kunststoffgranulats möglich ist.

Anstelle eines Kugelventils können auch andere Dosierventile verwendet werden, die ein Dosieren eines aus Kunststoffgranulat bzw. diskreten makroskopischen Körpern bestehenden Stoffstroms ermöglichen.

Gemäß einer Ausführungsform der Erfindung ist vorgesehen, dass die Vorrichtung dazu ausgebildet ist, mit Hilfe des Dosierventils des Auslasses den aus dem Innenraum des Druckbehälters entnehmbaren Volumenstrom des imprägnierten Kunststoffgranulats zu regeln.

Weiterhin ist gemäß einer Ausführungsform der Erfindung vorgesehen, dass die Vorrichtung dazu ausgebildet ist, mit Hilfe des Dosierventils des Auslasses und/oder mit Hilfe des Dosierventils des Einlasses eine Verweildauer des Kunststoffgranulats im mit Treibmittel befüllten Innenraum des Druckbehälters und damit eine Imprägnierungszeit des Kunststoffgranulats zu regeln oder zu steuern.

Weiterhin ist gemäß einer Ausführungsform der Erfindung vorgesehen, dass die Vorrichtung eine Sensoreinrichtung aufweist, die dazu ausgebildet ist, einen Füllstand des Kunststoffgranulats im Innenraum des Druckbehälters zu messen.

Die Sensoreinrichtung kann z.B. dazu ausgebildet sein, den Füllstand optisch zu erfassen oder auf andere Weise zu messen, z.B. gravimetrisch, wobei die Sensoreinrichtung dazu ausgebildet ist, z.B. das Gewicht des gesamten Druckbehälters mit darin befindlichem Kunststoffgranulat und Treibmittel zu erfassen, so dass der Füllstand aus dem gemessenen Gewicht ableitbar ist.

Weiterhin ist gemäß einer Ausführungsform der Erfindung vorgesehen, dass die Vorrichtung dazu ausgebildet ist, einen mittels der Sensoreinrichtung gemessenen Istwert des Füllstands durch Stellen des Ventils des Einlasses (z. B. Dosierventil) und/oder des Dosierventils des Auslasses auf einen gewünschten Sollwert zu regeln.

Gemäß einer Ausführungsform ist das Dosierventil des Auslasses ein Kugelventil (siehe oben), wobei das Stellen des Dosierventils ein Einstellen der Drehzahl des Ventilkörpers umfasst. Weiterhin kann gemäß einer Ausführungsform das Ventil bzw. das Dosierventil des Einlasses ein Kugelventil sein (siehe oben), wobei hier das Stellen des Kugelventils des Einlasses ein Einstellen der Drehzahl des Ventilkörpers des Kugelventils des Einlasses umfasst.

Das Dosierventil des Auslasses bzw. des Einlasses kann auch über ein externes Signal von einer Kunststoffverarbeitungsmaschine (z.B. eine Spritzgussmaschine), vorzugsweise von einer Füllstandsregelung eines Befülltrichters der Kunststoffverarbeitungsmaschine bzw. Spritzgussmaschine, angesteuert oder geregelt werden.

Weiterhin ist gemäß einer Ausführungsform der Erfindung vorgesehen, dass die Vorrichtung eine Messeinrichtung aufweist, die dazu konfiguriert ist, einen im Innenraum des Druckbehälters herrschenden Druck des Treibmittels laufend oder wiederholt zu messen.

Bei der Messeinrichtung kann es sich z. B. um einen Drucksensor, einen Drucktransmitter oder um ein Manometer mit Signalausgang handeln, wobei eine solche Messeinrichtung dazu ausgebildet ist, den Druck des Treibmittels im Innenraum direkt zu messen. Die Treibmittelmenge bzw. ein entsprechender Druck im Innenraum des Druckbehälters kann jedoch auch indirekt gemessen werden. Hierbei kann die Messeinrichtung z. B. eine gravimetrische Messeinrichtung sein, die z. B. eine durch einen Treibmittelverlust bedingte Gewichtsänderung des gesamten Druckbehälters erfasst und daraus den Druck des Treibmittels im Innenraum des Druckbehälters ableitet. Z. B. kann hierzu der gesamte Druckbehälter auf einer Waage angeordnet sein.

Beim Betrieb der oben beschriebenen Dosierventile kommt es zu einem Treibmittelverlust. Wie oben beschrieben, weist der kugelförmige Ventilkörper eines Kugelventils eine Tasche oder Nuten auf, in die Granulat und Treibmittel, insbesondere CO₂, fallen. Während der Drehung des kugelförmigen Ventilkörpers werden das Granulat und das CO₂ aus dem Druckbehälter freigesetzt. Die Menge des verlorenen Treibmittels bzw. CO₂ hängt mit der Größe der Taschen/Nuten, der Granulatkorngröße des Kunststoffgranulats und dem Treibmitteldruck im Innenraum des Druckbehälters zusammen. Dieser Treibmittel- bzw. CO₂-Verlust führt über die Prozessdauer zu einem kontinuierlichen Druckabfall im Innenraum des Druckbehälters, was sich negativ auf die Imprägnierung des Kunststoffgranulats auswirken kann. Um diesem schleichenden Druckabfall entgegenzuwirken, ist es vorteilhaft, Treibmittel (z.B. CO₂) nachzufüllen, um den Druck im Innenraum des Druckbehälters auf einem gewünschten Niveau zu halten.

Weiterhin ist gemäß einer Ausführungsform der Erfindung vorgesehen, dass die Vorrichtung dazu ausgebildet ist, Treibmittel in den Innenraum des Druckbehälters einzuleiten, wenn der im Innenraum des Druckbehälters gemessene Druck des Treibmittels um einen Betrag gesunken ist, der größer oder gleich einem vordefinierten Wert ist, wobei der vordefinierte Wert beispielsweise 0,5 bar beträgt.

Weiterhin ist gemäß einer Ausführungsform der Erfindung vorgesehen, dass die Vorrichtung dazu ausgebildet ist, einen im Innenraum des Druckbehälters beim Imprägnieren des Kunststoffgranulats herrschenden Druck des Treibmittels (z. B. CO₂) auf einen niedrigeren Haltedruck zu senken, wenn während einer vordefinierbaren Zeitspanne kein Kunststoffgranulat aus dem Innenraum des Druckbehälters entnommen wird.

Eine solche fehlende Entnahme kann z. B. auf eine Störung/Unterbrechung im nachfolgenden Spritzguss- oder Extrusionsprozess hindeuten. Der Haltedruck ist dabei vorzugsweise so gewählt, dass die Treibmittel- bzw. CO₂-Beladung näherungsweise konstant bleibt. Auf diese Weise kann eine "Überimprägnierung" des Kunststoffgranulats verhindert bzw. minimiert werden.

Gemäß einem weiteren Aspekt der vorliegenden Erfindung wird ein Verfahren zum Imprägnieren eines Kunststoffgranulats mit einem Treibmittel unter Verwendung einer erfindungsgemäßen Vorrichtung offenbart, wobei Kunststoffgranulat in den Innenraum des Druckbehälters über den Einlass des Druckbehälters eingeleitet wird und dort mit dem Treibmittel imprägniert wird, das über den Treibmitteleinlass in den Innenraum des Druckbehälters eingeleitet worden ist, und wobei das mit dem Treibmittel imprägnierte Kunststoffgranulat über das Dosierventil des Auslasses aus dem Innenraum des Druckbehälters entnommen wird.

Gemäß einer Ausführungsform des Verfahrens ist vorgesehen, dass das Kunststoffgranulat kontinuierlich über das Ventil des Einlasses in den Innenraum des Druckbehälters eingeleitet wird und/oder kontinuierlich über das Dosierventil des Auslasses aus dem Innenraum des Druckbehälters ausgegeben wird.

Kontinuierlich ist hierbei im Sinne eines kontinuierlichen Prozesses gegenüber einem Batchprozess zu verstehen, bei dem der Druckbehälter einmalig mit einer definierten Menge Kunststoffgranulat befüllt wird, sodann verschlossen wird und das Kunststoffgranulat im Innenraum des Druckbehälters mit dem Treibmittel imprägniert wird. Bei der Entnahme der Charge wird der Treibmitteldruck im Behälter abgebaut und zur Herstellung einer neuen Charge entsprechend den Prozessparametern erneut aufgebaut.

Beim vorliegenden kontinuierlichen Verfahren kann zwar zwischenzeitlich die Kunststoffgranulatzufuhr in den Druckbehälter und/oder die Entnahme aus dem Druckbehälter unterbrochen oder reduziert werden, der Prozess erfolgt jedoch grundsätzlich durchgehend, also ohne kompletten Druckabbau des Treibmittels im Druckbehälter.

Weiterhin ist gemäß einer Ausführungsform des Verfahrens vorgesehen, dass Treibmittel in den Innenraum des Druckbehälters eingeleitet bzw. nachgefüllt wird, wenn der im Innenraum des Druckbehälters gemessene Druck des Treibmittels um einen Betrag gesunken ist, der größer oder gleich einem vordefinierten Wert ist, wobei der vordefinierte Wert z. B. 0,5 bar beträgt.

Gemäß einer besonders bevorzugten Ausführungsform des Verfahrens weist das Treibmittel CO₂ auf oder wird durch CO₂ gebildet.

Weiterhin ist gemäß einer Ausführungsform der Erfindung vorgesehen, dass das Treibmittel (insbesondere CO₂) im Innenraum des Druckbehälters gasförmig ist.

Weiterhin ist gemäß einer Ausführungsform des Verfahrens vorgesehen, dass der Druck des gasförmigen Treibmittels (insbesondere CO₂) im Innenraum des Druckbehälters vorzugsweise kleiner oder gleich 40 bar ist.

Weiterhin ist gemäß einer Ausführungsform des Verfahrens vorgesehen, dass das Kunststoffgranulat im Innenraum des Druckbehälters vorzugsweise bis zu 6 Stunden mit dem gasförmigen Treibmittel (insbesondere CO₂) kontaktiert wird.

Weiterhin ist gemäß einer Ausführungsform des Verfahrens vorgesehen, dass die Temperatur des Kunststoffgranulats beim Imprägnieren mit dem gasförmigen Treibmittel (insbesondere CO₂) im Innenraum des Druckbehälters vorzugsweise im Bereich von 0°C bis 100°C liegt.

Gemäß einer alternativen Ausführungsform des Verfahrens ist vorgesehen, dass das Treibmittel (insbesondere CO₂) im Innenraum des Druckbehälters überkritisch ist.

Weiterhin ist gemäß einer Ausführungsform des Verfahrens vorgesehen, dass der Druck des überkritischen Treibmittels (insbesondere CO₂) im Innenraum des Druckbehälters vorzugsweise im Bereich von 74 bar bis 200 bar liegt.

Weiterhin ist gemäß einer Ausführungsform des Verfahrens vorgesehen, dass das Kunststoffgranulat im Innenraum des Druckbehälters vorzugsweise bis zu 3 Stunden mit dem überkritischen Treibmittel (insbesondere CO₂) kontaktiert wird.

Weiterhin ist gemäß einer Ausführungsform des Verfahrens vorgesehen, dass die Temperatur des Kunststoffgranulats beim Imprägnieren mit dem überkritischen Treibmittel (insbesondere CO₂) im Innenraum des Druckbehälters vorzugsweise im Bereich von 31°C bis 100°C liegt.

Gemäß einer bevorzugten Ausführungsform des Verfahrens ist weiterhin vorgesehen, dass das Kunststoffgranulat Polypropylen aufweist oder aus Polypropylen gebildet ist. Weiterhin können auch die oben bereits genannten Kunststoffe oder andere geeignete Kunststoffe verwendet werden, die mit dem verwendeten Treibmittel imprägnierbar sind.

Weiterhin ist gemäß einer bevorzugten Ausführungsform des erfindungsgemäßen Verfahrens vorgesehen, dass das aus dem Innenraum des Druckbehälters entnommene Kunststoffgranulat zur Herstellung eines Bauteils spritzgegossen oder extrudiert wird. In diesem Falle handelt es sich bei dem erfindungsgemäßen Verfahren um ein Verfahren zur Herstellung eines Bauteils aus einem Kunststoffgranulat mit vorherhegender Imprägnierung des Kunststoffgranulats mit dem Treibmittel (vorzugsweise CO₂).

Die erfindungsgemäße Vorrichtung und das erfindungsgemäße Verfahren weisen jeweils den Vorteil auf, dass kein Puffertank für die Lagerung von bereits imprägniertem Kunststoffgranulat erforderlich ist, da das Kunststoffgranulat bis zu seiner Verwendung im Druckbehälter verbleiben kann.

Weiterhin ist die Treibmittel- bzw. CO₂-Desorption aus dem imprägnierten Kunststoffgranulat nicht mehr relevant, da das imprägnierte Kunststoffgranulat nach der Entnahme aus dem Druckbehälter kontinuierlich der formgebenden Einrichtung (z.B. Spritzguss oder Extrusion) zugeführt und verarbeitet wird - in der Regel kurzzeitig. Ein derartiges kontinuierliches Verfahren ist insbesondere für das Extrusionsschäumen sehr gut geeignet (siehe oben).

Weiterhin wird im Unterschied zu einem Batch-Betrieb der Druckbehälter nicht häufig unter Druck gesetzt, sondern kann im Wesentlichen auf dem gleichen Druckniveau gehalten werden, was es grundsätzlich ermöglicht, die Wanddicke des Druckbehälters zu reduzieren, um die Kosten zu verringern.

In einem Batch-Prozess geht das nicht vom Kunststoffgranulat absorbierte Treibmittel (z.B. CO₂) bei der Druckreduzierung auf Umgebungsdruck verloren. Bei den erfindungsgemäß verwendbaren Dosierventilen geht zwar Treibmittel verloren, aber die Verluste sind unabhängig vom Füllgrad des Druckbehälters. Insbesondere bei einer Teilfüllung können die Verluste im Vergleich zu Batch-Prozessen deutlich reduziert werden.

Schließlich kann der Druck im Innenraum des Druckbehälters an den Kunststoff- bzw. Polymerverbrauch angepasst werden. Bei niedrigem Verbrauch können die Behandlungszeit bzw. Imprägnierungszeit verlängert und der Druck reduziert werden, was eine weitere Reduzierung der Gasverluste ermöglicht.

Weiterhin ist gemäß einer Ausführungsform des Verfahrens vorgesehen, dass der beim Imprägnieren des Kunststoffgranulats im Innenraum des Druckbehälters herrschende Druck des Treibmittels (z. B. CO₂), auf einen niedrigeren Haltedruck abgebaut wird, falls während einer vordefinierbaren bzw. einstellbaren Zeitspanne kein Kunststoffgranulat aus dem Innenraum des Druckbehälters entnommen wird, was z. B. auf eine Störung/Unterbrechung im nachfolgenden Spritzguss- oder Extrusionsprozess hindeuten kann (siehe oben). Der Haltedruck wird bei dem Verfahren dabei vorzugsweise so gewählt, dass die Treibmittel- bzw. CO₂-Beladung beim Haltedruck näherungsweise konstant bleibt.

Die Granulatentnahme kann z.B. über die Steuerung der Vorrichtung (Drehung der Dosierventile), die Füllstandsmessung oder durch ein Signal von der Spritzgussmaschine (z.B. von der Füllstandsregelung eines Trichters der Spritzgussmaschine) überwacht werden. Außerdem kann ein Störungssignal der Spritzgussmaschine verwendet werden. Wenn wieder Kunststoffgranulat entnommen wird, wird wieder der reguläre zum Imprägnieren verwendete Druck des Treibmittels im Innenraum des Druckbehälters verwendet.

Nachfolgend sollen Ausführungsformen der Erfindung sowie weitere Merkmale und Vorteile der Erfindung anhand der Figuren erläutert werden. Es zeigen:
- Fig. 1: eine schematische Darstellung einer Ausführungsform einer erfindungsgemäßen Vorrichtung mit Dosierventilen am Einlass und am Auslass des Druckbehälters;
- Fig. 2: eine schematische Darstellung einer weiteren Ausführungsform einer erfindungsgemäßen Vorrichtung mit einem Dosierventil am Auslass des Druckbehälters, und
- Fig. 3: eine schematische Darstellung einer Verfahrensweise zum Nachfüllen von Treibmittel in den Innenraum des Druckbehälters der Figuren 1 und 2 zur Konstanthaltung des Treibmitteldrucks.

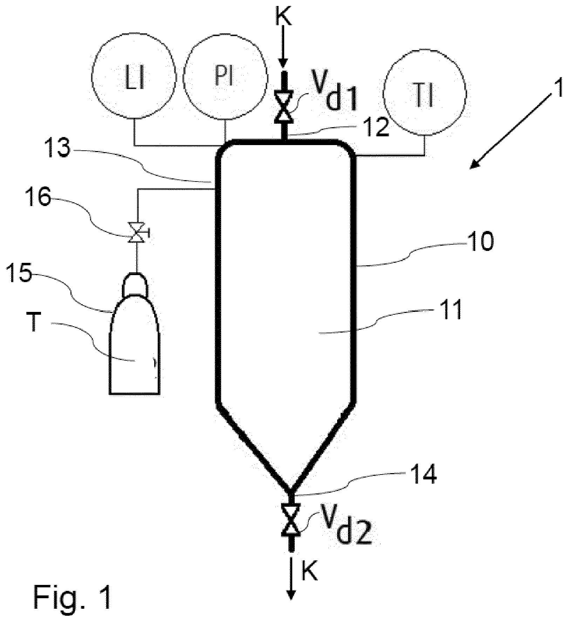

Figur 1 zeigt eine Ausführungsform einer Vorrichtung 1 zur Imprägnierung von Kunststoffgranulat K, z.B. Polymergranulat aus Polypropylen (PP), mit einem Treibmittel T, wobei die Vorrichtung 1 eine kontinuierliche Imprägnierung und Dosierung des Granulats K mit dem Treibmittel T ermöglicht. Bei dem Treibmittel T handelt es sich bevorzugt um CO₂.

Die Vorrichtung 1 weist einen Druckbehälter 10 auf, der einen Innenraum 11 zur Aufnahme des Kunststoffgranulats K umgibt, wobei der Druckbehälter 10 vorzugsweise am Kopf einen Einlass 12 zum Einfüllen des Kunststoffgranulats K in den Innenraum 11 aufweist. Weiterhin verfügt der Druckmittelbehälter 10 über einen Treibmitteleinlass 13 zum Einleiten des Treibmittels T bzw. CO₂ in den Innenraum 11. Das Treibmittel T, hier vorzugsweise CO₂, kann in einem externen Behälter 15, z.B. in Form einer Druckflasche 15, bereitgestellt werden und kann über ein Ventil 16 mit dem Treibmitteleinlass 13 verbunden und in den Innenraum 11 des Druckbehälters 10 eingeleitet werden. Weiterhin kann der Druckbehälter 10 einen hier nicht gezeigten Treibmittelauslass zum Ablassen von Treibmittel T aus dem Innenraum 11 des Druckbehälters 10 aufweisen.

Der Druckbehälter 10 weist weiterhin in einem unteren Abschnitt einen Auslass 14 auf, der zum Entnehmen von mit dem CO₂ imprägniertem Kunststoffgranulat K aus dem Innenraum 11 des Druckbehälters 10 dient. Der Druckbehälter 10 bzw. die Vorrichtung 1 ist zum kontinuierlichen Imprägnieren von Kunststoffgranulat K im Innenraum 11 des Druckbehälters 10 sowie zur kontinuierlichen Entnahme von imprägniertem Kunststoffgranulat K aus dem Innenraum 11 des Druckbehälters 10 über den Auslass 14 ausgebildet, wobei der Auslass 14 ein Dosierventil V_{d2} aufweist, so dass ein pro Zeiteinheit aus dem Innenraum 11 des Druckbehälters 10 entnehmbarer Volumenstrom des imprägnierten Kunststoffgranulats K präzise einstellbar ist.

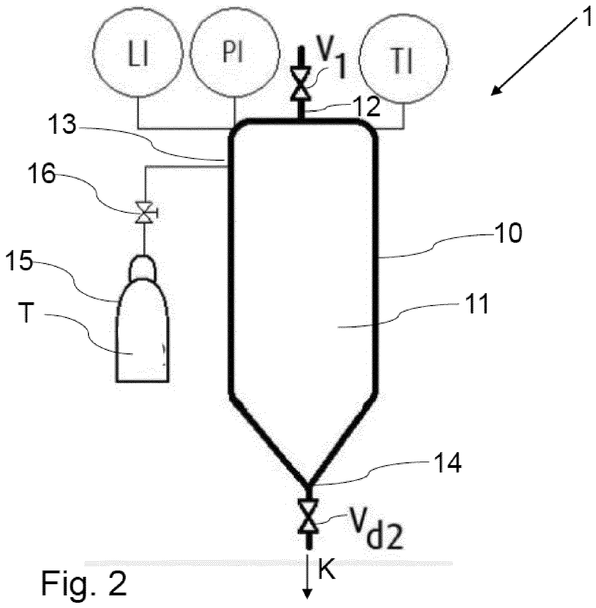

Figur 1 zeigt eine Ausführungsform des Vorrichtung 1, wobei der Einlass 12 ebenfalls mit einem Dosierventil V_{d1} ausgestattet ist. Alternativ hierzu kann gemäß Fig. 2 auch ein herkömmliches für Kunststoffgranulat K geeignetes Ventil V₁ eingesetzt werden. Im Gegensatz zu einem derartigen herkömmlichen Ventil V₁ ist das jeweilige Dosierventil V_{d1}, V_{d2} dazu ausgebildet, das Kunststoffgranulat K in diskreten Volumina zu transportieren bzw. durchzulassen.

Die Vorrichtung 1 weist weiterhin einen Sensoreinrichtung LI zum Erfassen eines Füllstands des Kunststoffgranulats K im Innenraum 11 des Druckbehälters 10, einen Temperatursensor TI zum Messen der Temperatur des Kunststoffgranulats K im Innenraum 11 des Druckbehälters 10 sowie eine Messeinrichtung PI zum Messen eines Drucks des CO₂ bzw. Treibmittels T im Innenraum 11 des Druckbehälters 10 auf.

Während des Prozesses wird Kunststoffgranulat K in den Innenraum 11 des Druckbehälters 10 über den Einlass 12 gegeben und dort in situ mit dem gasförmigen Treibmittel T in Form von CO₂ imprägniert, und zwar gemäß einem ersten Beispiel der Erfindung unter den folgenden Bedingungen:
- CO₂-Druck bis zu 40 bar,
- Imprägnierungszeit (Verweilzeit des Kunststoffgranulats K bis zur Entnahme über den Auslass 14) bis zu 6 Stunden,
- Kunststoffgranulattemperatur: 0°C bis zu 100°C.

Gemäß einem weiteren Beispiel kann das Kunststoffgranulat K mit einem Treibmittel T in Form von überkritischem CO₂ (sCO₂) unter den folgenden Bedingungen imprägniert werden:
- sCO₂-Druck von 74 bar bis zu 200 bar,
- Temperatur des Kunststoffgranulats bzw. sCO₂-Temperatur: 31°C bis 100°C,
- Imprägnierungszeit: bis zu 3 Stunden.

Der Vorteil der Verwendung von überkritischem CO₂ (sCO₂) liegt in der deutlich kürzeren Imprägnierungszeit. Die nachfolgende Tabelle zeigt beispielhafte Prozessbedingungen für den Fall der Verwendung von überkritischem CO₂ als Treibmittel T:

| Polymer | | Gewicht [g] | Gewicht imprägniert [g] | Massenzunahme [g] | Massenzunahme [%] | Imprägnierungszeit | Druck [bar] | Temperatur [°C] |
|---|---|---|---|---|---|---|---|---|
| PP | | 50,0038 | 50,7457 | 0,7419 | 1,48% | 2 | 35 | RT |
| PP | | 48,9021 | 49,6546 | 0,7525 | 1,54% | 2 | 35 | 48 |
| PP | | 53,1192 | 54,4603 | 1,3411 | 2,52% | 0,5 | 90 | 48 |
| PP | | 54,015 | 55,0734 | 1,0584 | 1,96% | 0,25 | 87 | 48 |

Die erste Spalte der Tabelle gibt das Material des Kunststoffgranulats K an, hier z. B. Polypropylen (PP). Die Imprägnierungszeit sowie der beim Imprägnieren verwendete Druck und die verwendete Temperatur sind in den drei letzten Spalten angegeben, wobei RT für Raumtemperatur steht.

Mit einer kürzeren Imprägnierungszeit ist es in vorteilhafter Weise möglich, kleinere Druckbehälter zu verwenden, wobei der gleiche Granulatdurchsatz erzielt werden kann.

Wie bereits oben dargelegt, können die Dosierventile V_{d1}, V_{d2} als rotierende Kugelventile ausgestaltet sein. Es können auch andere Dosierventile verwendet werden, die eine Granulatdosierung unter dem verwendeten CO₂-Druck ermöglichen.

Die Granulat-Dosiergeschwindigkeit bzw. ein entsprechender Volumenstrom des Kunststoffgranulats K [Liter/Stunde] und die Verweildauer des Kunststoffgranulats K im Innenraum 11 des Druckbehälters 10, die in der Gegenwart des Treibmittels T / CO₂ der Imprägnierungszeit entspricht, können z. B. durch eine entsprechende Wahl der Auf-Zu-Zykluszeit des/der Dosierventils/e V_{d1}, V_{d2} und durch eine entsprechende Auswahl des Imprägnierungsdrucks eingestellt werden.

Der besagte Volumenstrom und die Verweildauer des Kunststoffgranulats K im Innenraum 11 des Druckbehälters 10 (d.h. die Imprägnierungszeit) werden vorzugsweise durch den Auf-Zu-Zyklus der Dosierventile V_{d1}, V_{d2} geregelt. Im Falle von Kugelventilen ist die Zykluszeit mit der Anzahl der Kugelumdrehungen pro Minute (RPM) verbunden. Durch Anpassung der Drehzahl in Bezug auf das Volumen des Innenraums 11 und den Granulattyp kann man den Kunststoffgranulatdurchsatz (Volumenstrom in Liter/Stunde) und die Verweildauer des Granulats K im Innenraum des Druckbehälters einstellen.

Der Druckbehälter 10 kann mit einer Sensoreinrichtung LI ausgestattet werden, die die Messung eines Füllstands des Kunststoffgranulats K im Innenraum 11 des Druckbehälters 10 ermöglicht. Dies kann z.B. ein Füllstandsensor LI sein, der den Füllstand des Granulats K überwacht, oder ein gravimetrisches Messsystem, das das Gewicht des gesamten Druckbehälters 10 überwacht (z.B. Waage).

Die Messwerte der Sensoreinrichtung bzw. des Füllstandsensors / der Waage LI können dazu verwendet werden, um die Öffnung der Ventile V₁ bzw. V_{d1} und V_{d2} des Einlasses 12 sowie des Auslasses 14 zu steuern oder zu regeln sowie insbesondere die Auf-Zu-Zyklen von verwendeten Dosierventilen V_{d1}, V_{d2} (z. B. die Drehzahl bei Kugelventilen) einzustellen, um den Füllstand des Granulats K im Innenraum 11 des Druckbehälters 10 auf dem gewünschten Niveau zu halten.

Der Druckbehälter 10 weist weiterhin vorzugsweise eine Sensoreinrichtung PI auf, z. B. in Form eines Drucksensors/Drucktransmitters oder Manometers mit Signalausgang, die dazu eingerichtet ist, ständig oder wiederholt den CO₂-Druck im Innenraum 11 des Druckbehälters 10 zu messen. Die CO₂-Menge im Innenraum 11 des Druckbehälters 10 kann auch indirekt gemessen werden, indem der gesamte Druckbehälter 10 auf eine Waage gestellt wird, oder durch ein beliebiges anderes gravimetrisches Messsystem, das auf Gewichtsänderungen des gesamten Druckbehälters 10 bezogen ist.

Während des Betriebs von Dosierventilen kommt es zu einem CO₂-Verlust. Im Falle von Dosierkugelventilen weist der kugelförmige Ventilkörper zumindest eine Tasche auf, in die Granulat K und CO₂ fallen. Während der Drehung des Ventilkörpers werden das Granulat K und das CO₂ aus dem Innenraum 11 des Druckbehälters 10 freigesetzt (vgl. Ventil V_{d2} gemäß Figuren 1 und 2). Die Menge des CO₂-Verlustes hängt dabei insbesondere von der Taschengröße, der Granulatkorngröße und dem CO₂-Druck im Innenraum 11 des Druckbehälters 10 ab.

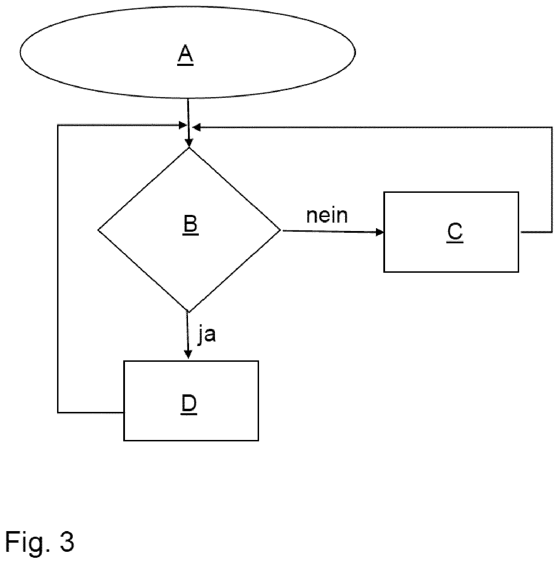

Um diesem Druckverlust entgegenzuwirken, ist es gemäß einer in der Figur 3 schematisch dargestellten Ausführungsform der Erfindung vorgesehen, CO₂ regelmäßig nachzufüllen, so dass der Druck im Innenraum 11 des Druckbehälters 10 auf einem im Wesentlichen konstanten Niveau gehalten werden kann. Der CO₂-Nachfüllprozess kann z.B. durch den in der Figur 3 dargestellten Algorithmus erfolgen, der sicherstellt, dass der CO₂-Druck stabil genug gehalten wird, um eine effiziente Imprägnierung des Granulats K mit dem CO₂ zu gewährleisten. Danach ist vorgesehen, den Druck des CO₂ nach einer initialen Füllung A des Innenraumes mit dem CO₂ auf z.B. 35 bar laufend zu messen und zu prüfen, ob der Druck z. B. um zumindest 0,5 bar gesunken ist B. Für den Fall, dass der Druckverlust geringer ist, wird erneut gemessen und geprüft B. Andernfalls wird im Schritt D CO₂ über den Treibmitteleinlass 13 in den Innenraum 11 des Druckbehälters 10 nachgefüllt und hiernach erneut gemessen und auf Druckverlust geprüft B. Der Druck des CO₂ im Innenraum 11 des Druckbehälters 10 kann mit der Sensoreinrichtung PI (siehe oben) gemessen werden.

## Patentansprüche

1. Vorrichtung (1) zum Imprägnieren eines Kunststoffgranulats (K) mit einem Treibmittel (T), aufweisend:
- einen Druckbehälter (10), der einen Innenraum (11) zur Aufnahme des Kunststoffgranulats (K) aufweist,
- einen Einlass (12) des Druckbehälters (10) zum Einfüllen von Kunststoffgranulat (K) in den Innenraum (11) des Druckbehälters (10),
- einen Treibmitteleinlass (13) zum Einleiten des Treibmittels (T) in den Innenraum (11) des Druckbehälters (10), und
- einen Auslass (14) des Druckbehälters (10) zum Entnehmen von mit dem Treibmittel (T) imprägniertem Kunststoffgranulat (K) aus dem Innenraum (11) des Druckbehälters (10),
**dadurch gekennzeichnet, dass** der Druckbehälter (10) zum kontinuierlichen Imprägnieren von Kunststoffgranulat (K) im Innenraum (11) des Druckbehälters (10) sowie zur kontinuierlichen Entnahme von imprägniertem Kunststoffgranulat (K) aus dem Druckbehälter (10) über den Auslass (14) ausgebildet ist, wobei der Auslass (14) ein Dosierventil (V_{d2}) aufweist, so dass ein pro Zeiteinheit aus dem Innenraum (11) des Druckbehälters (10) entnehmbarer Volumenstrom des imprägnierten Kunststoffgranulats (K) einstellbar ist.

2. Vorrichtung nach einem der vorhergehenden Ansprüche, **dadurch gekennzeichnet, dass** der Einlass (12) ein Ventil (V₁, V_{d1}) zum Einlassen von Kunststoffgranulat (K) in den Innenraum (11) des Druckbehälters (10) aufweist.

3. Vorrichtung nach Anspruch 2, **dadurch gekennzeichnet, dass** das Ventil des Einlasses (12) ein Dosierventil (V_{d1}) ist, so dass ein pro Zeiteinheit in den Innenraum (11) des Druckbehälters (10) einleitbarer Volumenstrom des Kunststoffgranulats (K) einstellbar ist.

4. Vorrichtung nach einem der vorhergehenden Ansprüche, **dadurch gekennzeichnet, dass** die Vorrichtung (1) dazu ausgebildet ist, mit Hilfe des Dosierventils (V_{d2}) des Auslasses (14) den aus dem Innenraum (11) des Druckbehälters (10) entnehmbaren Volumenstrom des imprägnierten Kunststoffgranulats (K) zu regeln.

5. Vorrichtung nach einem der vorhergehenden Ansprüche, **dadurch gekennzeichnet, dass** die Vorrichtung (1) dazu ausgebildet ist, mit Hilfe des Dosierventils (V_{d2}) des Auslasses (14) und/oder mit Hilfe des Dosierventils (V₁, V_{d1}) des Einlasses (12) eine Verweildauer des Kunststoffgranulats (K) im Innenraum (11) des Druckbehälters (10) und damit eine Imprägnierungszeit des Kunststoffgranulats (K) zu regeln oder zu steuern.

6. Vorrichtung nach einem der vorhergehenden Ansprüche, **dadurch gekennzeichnet, dass** die Vorrichtung (1) eine Sensoreinrichtung (LI) aufweist, die dazu ausgebildet ist, einen Füllstand des Kunststoffgranulats (K) im Innenraum (11) des Drückbehälters (10) zu messen.

7. Vorrichtung nach einem der vorhergehenden Ansprüche, **dadurch gekennzeichnet, dass** die Vorrichtung (1) dazu ausgebildet ist, einen mittels der Sensoreinrichtung (LI) gemessenen Istwert des Füllstands durch Stellen des Ventils (V₁, V_{d1}) des Einlasses (12) und/oder des Dosierventils (V_{d2}) des Auslasses (14) auf einen gewünschten Sollwert zu regeln.

8. Vorrichtung nach einem der vorhergehenden Ansprüche, **dadurch gekennzeichnet, dass** die Vorrichtung (1) eine Messeinrichtung (PI) aufweist, die dazu konfiguriert ist, einen im Innenraum (11) des Druckbehälters (10) herrschenden Druck des Treibmittels (T) laufend oder wiederholt zu messen.

9. Vorrichtung nach Anspruch 8, **dadurch gekennzeichnet, dass** die Vorrichtung (1) dazu ausgebildet ist, Treibmittel (T) in den Innenraum (11) des Druckbehälters (10) einzuleiten, wenn der gemessene Druck um einen Betrag gesunken ist, der größer oder gleich einem vordefinierten Wert ist, wobei der vordefinierte Wert vorzugsweise 0,5 bar beträgt.

10. Vorrichtung nach einem der vorhergehenden Ansprüche, **dadurch gekennzeichnet, dass** die Vorrichtung (1) dazu ausgebildet ist, einen im Innenraum (11) des Druckbehälters (10) beim Imprägnieren des Kunststoffgranulats (K) herrschenden Druck des Treibmittels (T) auf einen niedrigeren Haltedruck zu senken, wenn während einer vordefinierbaren Zeitspanne kein Kunststoffgranulat (K) aus dem Innenraum (11) des Druckbehälters (10) entnommen wird.

11. Verfahren zum Imprägnieren eines Kunststoffgranulats (K) mit einem Treibmittel (T) unter Verwendung einer Vorrichtung (1) nach einem der vorhergehenden Ansprüche, wobei Kunststoffgranulat (K) in den Innenraum (11) des Druckbehälters (10) über den Einlass (12) des Druckbehälters (10) eingeleitet wird, dort mit dem Treibmittel (T), das über den Treibmitteleinlass (13) in den Innenraum (11) des Druckbehälters (10) eingeleitet worden ist, imprägniert wird und über das Dosierventil (V_{d2}) des Auslasses (14) aus dem Innenraum (11) des Druckbehälters (10) entnommen wird.

12. Verfahren nach Anspruch 11, wobei das Kunststoffgranulat (K) kontinuierlich über den Einlass (12) in den Innenraum (11) des Druckbehälters (10) eingeleitet wird und/oder kontinuierlich über das Dosierventil (V_{d2}) des Auslasses (14) aus dem Innenraum (11) des Druckbehälters (10) ausgegeben wird.

13. Vorrichtung nach einem der Ansprüche 11 bis 12, wobei Treibmittel (T) in den Innenraum (11) des Druckbehälters (10) eingeleitet wird, wenn ein im Innenraum (11) des Druckbehälters (10) herrschender Druck des Treibmittels (T) um einen Betrag gesunken ist, der größer oder gleich einem vordefinierten Wert ist, wobei der vordefinierte Wert vorzugsweise 0,5 bar beträgt.

14. Verfahren nach einem der Ansprüche 11 bis 13, wobei das Treibmittel CO₂ aufweist oder durch CO₂ gebildet ist.

15. Verfahren nach einem der Ansprüche 11 bis 14, wobei das Treibmittel (T) im Innenraum (11) des Druckbehälters (10) gasförmig ist, wobei der Druck des Treibmittels (T) im Innenraum (11) des Druckbehälters (10) vorzugsweise kleiner gleich 40 bar ist, wobei das Kunststoffgranulat (K) im Innenraum (11) des Druckbehälters (10) vorzugsweise bis zu 6 Stunden mit dem Treibmittel (T) kontaktiert wird, und wobei die Temperatur des Kunststoffgranulats (K) im Innenraum (11) des Druckbehälters (10) vorzugsweise im Bereich von 0°C bis 100°C liegt; oder wobei das Treibmittel (T) im Innenraum (11) des Druckbehälters (10) überkritisch ist, wobei der Druck des überkritischen Treibmittels (T) im Innenraum (11) des Druckbehälters (10) vorzugsweise im Bereich von 74 bar bis 200 bar liegt, wobei das Kunststoffgranulat (K) im Innenraum (11) des Druckbehälters (10) vorzugsweise bis zu 3 Stunden mit dem überkritischen Treibmittel (T) kontaktiert wird, und wobei die Temperatur des Kunststoffgranulats (K) im Innenraum (11) des Druckbehälters (10) vorzugsweise im Bereich von 31°C bis 100°C liegt.
